# EUROPEAN PATENT APPLICATION

(11) **EP 0 561 747 A1**
(43) Date of publication of application: **22.09.1993**
(21) Application number: 93830098.5
(22) Date of filing: 12.03.1993
(51) Int. Cl.: A01K 93/00

(54) **Fishing float with sliding, independent indicator rod**

(30) Priority: 16.03.1992 IT BO920091
(71) Applicant: Crespi, Carlo Emanuele, I-40024 Castel San Pietro Terme (BO) (IT)
(72) Inventor: Crespi, Carlo Emanuele, I-40024 Castel San Pietro Terme (BO) (IT)
(74) Representative: Trentini, Ermanno

(57) **Abstract**

The object of the present invention is a fishing float satisfying some essential needs of the fisherman for sport: accurate casting to the desired distance; lack of "bridge" points, thus preventing any possible entanglement of the line; excellent visibility of the indicator in any weather condition, less penetration friction into the water and, as a result, since less resistance is offered to the bite, difficulty on the part of the catch in realizing the trick; utmost response sensitivity to a bite, so as to allow a prompt strike; interchangeability of floats of varying weight in grams; possible use in flat, running or rough waters.

## Description

It is widely known that a fisherman for sport needs to fish using a float: which is to be as light as possible; to be able to cast it to the desired distance; not to have to repeat casting because of the entanglement of the line; to easily manage to detect its position at any time and to be able to appreciate any, even the slightest, significant signal on its part thanks to the utmost stability which characterizes the indicator during the act of fishing even in unfavourable weather conditions; to be able to have enough time to realize that the fish is taking the bait and, therefore, that the bite has been repeated because the catch does not feel any annoying resistance on the part of the bait, to be able to benefit from its sensitivity in order to "strike" successfully; to be able to replace a float with another one of different weight in grams, without having to change the whole line and, last but not least, depending on whether he chose a river, a lake or the sea as his swim, to be able to fish in running, flat or rough waters.

At present there is no float exhibiting such properties that can meet all the above requirements in one contrivance.

The commonly used floats can be broken down into two large families: Conventional Floats and Lead-shotted Floats. The **Conventional Float**, which is suitable for flat waters (where, however, it has been mainly superseded by the use of Lead-shotted Floats), and for running waters (it is perfect for the so-called "long trotting and stretting"), is made up of a floating body, a fin and an indicator rod, and to keep floating upright in balance, when in the water, it needs to be lead-shotted for a corresponding weight in grams along the end of the fishing line, that is downstream. The floating body is made of various materials provided that they are suitable for floating; it can be of different shapes depending on the type of fishing you wish to do, since the shape provides, the weight being equal, different resistance to penetration, due to the overall surface opposed to the water. The floating body is crossed, along its longer axis, by an imaginary line ending, on the fishing part, with a fin of varying length and made of various materials as well, according to whether it is a carrier or not (wood, steel, carbon fibre), and on the emerging part with an indicator rod which is extremely various and miscellaneous as to its length and the materials it is made of; on the surface next to the indicator rod, the floating body bears a tiny steel small ring which is fixed inside its own body. The fin and the tiny ring are the structures aimed at firmly uniting the float to the line (or are meant to provide the line with a passage if the float is a sliding float). The indicator rod has been devised to emphasize the movement of the float due to a taking fish. Obviously, with a conventional float, when the indicator rod moves, it is because it is moving jointly with the whole floating body. The conventional float, whatever its shape may be, exhibits floating features which are more similar to awkward heaviness than to light and sensitive stability.

A Conventional Float does not meet all needs of the fisherman for sport in one contrivance.

If a conventional float is small-sized, the indicator rod is so small that it can be hardly seen, even from close up; if it is small-sized it is light too, however its light weight does not allow accurate positioning beyond a certain range and, as a result: extreme lightness is a restriction to the use of the same with many types of fishing tackle and with line yarns whose calibre is not sufficiently small. As a matter of fact, in case a long stationary fishing-rod is used, there is a problem arising due to the ratio of the weight of the floating unit (floating body + shotting for ensuring its stable equilibrium) to strengths acting to the opposite direction, thus reducing the dragging action of the line. When the floating unit is mounted on a line whose length is out of proportion to its weight, between the point of attachment of the line to the flexible tip of the fishing-rod (the fulcrum of the action) and the position of the floating unit (point of resistance), there is not the necessary and sufficient tension needed in order that the lash (point of force) which is exerted on the fishing-rod to bring the fishing unit to the desired distance, produces the desired results. If the floating unit is mounted on the end of the line of a Bolognese rod (spin casting rod fitted with a reel) dressed with a line yarn whose section (diameter) is not related to the weight of the same "floating unit", the rigidity of the line yarn (the greater the diameter of the line yarn, the more flexibility is lost) together with the friction which results from sliding along the loops placed on the rod and together with the friction exerted by the line yarn when unwinding from the reel, nullifies casting. As a matter of fact, to obviate these objective difficulties in using small and very light floats, a special rod was developed few years ago: the Roubesienne. This is nothing more than an approx. 13 meter long rod, broken down into sections which are mounted and then dismounted every time an act of fishing is performed. This is aimed at positioning the fishing unit equipped with a very small float without casting it but by actually bringing it to the swim, by successively extending the rod which results from inserting the different sections the rod is made of.

Therefore, the most obvious solution for the fisherman for sport who does not use this special rod, is to use a sufficiently heavy float which can prevent the above-mentioned inconvenience which is due to the use of a float whose weight is infinitesimal; however, the dimensions of a float of heavier weight in grams are also larger.

As a result: when conventional floats of varying weight in grams are used, it is not only the weight in grams which changes but the dimensions of the same change as well.

If a conventional float is of larger dimensions, its wet surface increases in proportion, thus increasing the overall friction exerted by the object. In addition, we should also consider the friction exerted by all the shots necessary to ensure its stable equilibrium which are attached downstream along the end line. Friction is an important disturbing factor encouraging the suspicion which is innate in many species of fish. If this float has larger dimensions its weight is consequently heavier. Weight is after all the parameter which should change in order to obviate the inconvenience caused by the float of infinitesimal weight, but its sensitivity to the bite is thus considerably reduced.

In any case, whether it is small and very light or of larger dimensions and as a result of heavier carat weight, the conventional float (except for some shapes which are suitable for penetration into fluids, from an ergonomic point of view (Tess) but which are also difficult to use (to this effect you need to be a very good fisherman and not all fishers are very good fishers because fishing is not mainly or only a professional activity but it is more of a hobby)) is extremely awkward in sending the visual signal because of the movement of the whole floating body as a response to the bite. The above visual signal is so inaccurate and often misleading since it can be easily confused with movements of the float which are not caused by a taking fish but by incidental factors having nothing to do with the bite itself (wind, rippling of the water surface, movements of the line outside the water). When the weight in grams is to be changed, all the end part of the line should be dismounted; as a matter of fact, the line yarn is firmly united to the float also by means of the loop tiny ring placed on the body of the float itself near the indicator rod, that is the shotting level and therefore, in order to be able to change the object, it should be withdrawn from the line. Finally, all weights in grams require indicator rods of limited length so that an inevitable defect is not emphasized, that is the "bridge" point created by the intersection of the indicator rod with the line yarn passing through the tiny steel ring placed on the floating body. This "bridge" point frequently causes the line to entangle together with the float.

The **Lead-shotted Float**, which is only used in flat waters, is made of a floating body, a tiny fin and an indicator rod, and does not need to be lead-shotted (unless you like it to be further lead-shotted within a given small range) downstream relative to the point where it is positioned along the line, because, since it is "lead-shotted" it keeps floating upright in balance on its own. The shape and dimensions of the lead-shotted float are extremely various; from the shapes which stick to conventional floats to the totally special shapes of the so-called "English" float. Nevertheless, they share the same operation principle despite the fact that their shapes are different as well as their names; the difference in shape makes floats differ only in the way they are used, and their different names are obviously useful in order to identify their shapes and consequently their use. The floating body ends, on the fishing part, with a fin of extremely short length, not to say that it is nearly inexistent, and which corresponds to the heavy part of the float. This particular shotting position allows the same to float upright in balance on its own when it is in the water, thus providing an additional advantage. You can place the residual weight in grams, if you intend to do so, downstream relative to the float itself. On the part emerging from the free surface of the water, the floating body, acting as an indicator rod, has the most varied shapes (from the perfectly round shape of the floating body with no indicator rod as is the case with the oval bubble float, to the long, naked rod of the "English" float or the "feather" float) and is made of the most various materials. The line is firmly united (or not when it is left sliding) to the float by means of a loop made of a ring turning around itself (pulley), placed at the end of the fin and, as a result, the line is submerged, under the free surface of the water, at a depth corresponding to the height of the submerged part of the float. This is not united to the whole body of the Lead-shotted Float, as was the case with the Conventional Float. The shotting of this float is not a function of its useful capacity. The weight in grams necessary for fishing, I mean, 1/2 gram, 2 grams etc., is a fraction of the overall capacity of the float, since the lead-shotted float is aimed at providing the fisherman with a heavy body able to ensure successful casting but it should be calibrated in such a way that, once it is submerged under the water, only its residual capacity is there opposing resistance to the bite. This means that if a lead-shotted float is calibrated to 10+2, a body of 10 grams is used for casting, but in the water it only bears 2 grams since the remaining weight is set for ensuring its static balance. A decrease in the residual capacity of said float can only be made by adding more weight downstream relative to the same.

A Lead-shotted Float does not meet all needs of the fisherman for sport in one contrivance.

When the float is in static equilibrium in the water, the submerged part of the same has a large friction surface and, because of the presence of the lead shots necessary to balance its capacity, it is charged with potential energy.

In this way, the object, due to its large friction surface and being charged with potential energy provided by the weight necessary to calibrate its state of equilibrium, responds to the strain exerted by the taking fish by releasing much energy which is entirely converted into a redundancy of actions that can be only seemingly interpreted as "sensitivity" of the system. As a matter of fact, this is a system which, when under strain, turns into a "highly disturbed system" whose convulsive actions affect the whole fishing unit. Therefore, it can be said that the Lead-shotted Float is stable when in the static position, but its stability does not keep the necessary operational balance because of excessive dynamic response when a change of state occurs due to a taking fish. It should be pointed out that this behaviour seriously affects any accurate, apparent, sensitive response to the bite by the catch.

The fact that the line is firmly united to the pulley placed in the lowest part of the submerged portion of the lead-shotted float is the reason why it is impossible for it to be used in running waters. As a matter of fact, the pulley is the fulcrum of a system of forces where the resistance is provided by the line holding the float and the force is provided by the current of the water acting in a centrifugal direction relative to the resistance. Obviously, the float which is firmly united to the pulley just in the position of the fulcrum, is submitted to the force of the current which makes it turn around itself and due to such rotation, obviously in the direction of the force that is of the current it completely disappears under the free surface of the water. As a result, the Lead-shotted Float cannot be used in running waters.

Finally, before describing the contrivance we should explain and make clear, at least as far as Floats are concerned, whether Conventional or Lead-shotted, what is referred to by "weight in grams" and "capacity" of a float. At present, the parameter determining the capacity of a float is, as is commonly thought, its weight in grams, that is the weight of the lead shots necessary to keep it in stable equilibrium. On the other hand, capacity does not only depend on weight but also on the surface. The weight being equal, in the case of two floats of different shape (for example a "Tess" and a "Pear-shaped" float), the float having such a shape as to provide a larger wet surface compared with the surface of the other, will feature the higher capacity. Therefore, with conventional floats, to change the capacity of a float relative to a weight placed on the fishing unit, it will not only be necessary to modify the weight in grams "born" by the same but a float should be chosen having such a shape, and consequently such an overall wet surface as is needed to answer the need. The surface of the contrivance is increased as a result of its increased length, and therefore its capacity is changed, this change, however, does not affect the overall resistance of the floating unit since the tube-like shape does not change, hence the diameter of the object does not change either.

The present invention has been developed mainly to eliminate the inconvenience described above affecting existing floats, by contriving a newly developed float able to satisfy the needs of the fisherman for sport. It is supposed to be as follows: of such convenient weight and shape as to be able to be accurately cast to the desired place; with no "bridge" points so that it does not entangle with the line; of very good visibility over all the desired range and of utmost stability even in unsettled weather conditions; generating the slightest friction with the water due to the small overall submerged surface, the section of the tube which never changes and due to its length which increases the capacity of the object without considerably affecting the resistance of the same in the liquid medium; of very good sensitivity thanks to its ergonomic shape which is more suitable for penetrating into fluids; with interchangeable indicator rods which can be changed without having to carry out a new line application; able to be used in flat and running or rough waters.

The present contrivance stands out for being made up of the following:

An **Indicator Rod** which is at the same time the **Float (FIR)** i.e. the light and sensitive floating part of the contrivance, which acts jointly with the fishing unit, which means that it is firmly united to the line but which is also a long "fin" stabilizing the part emerging from the free surface of the water (at least 2/3 of the whole FIR are submerged under the free surface of the water). Once inserted into the weighty part of the Floating Unit this long fin which is also a spur without any gap of the FIR, since it is the FIR itself, exhibits all positive features of the act of fishing by the Floating Unit being the subject of the present invention.

A **Sinking Sinker (SS)** or alternatively a **Floating Sinker (FS)** which are the weighty component parts of the contrivance and the ballast of the fin consisting in the FIR. Even though they incorporate the float FIR inside and along the tube of any suitable diameter and even though they interfere with the FIR in that they protect it against foreign attacks, they do not act jointly either with the float itself or with any point of the line during the act of fishing. On the other hand they directly interfere with the FIR during the casting phase. Due to its slight interference with the protection provided to the FIR during the fishing phase and due to its direct interference which is totally exerted during the casting phase, this Weighty Component Part exhibits all positive features of the Floating Unit being the subject of the present invention, which consist in the act of positioning and in stability.

**As a result, the present invention is the contrivance FIR + (SS or FS) when the component parts FIR and SS/FS assembled together make a firmly united unit**.

Since they are fully integrated during the casting phase, the weight provided by the SS or the FS added to the FIR/SS or FIR/FS unit reaches the goal which fostered the present invention: to easily position, thanks to a weight suitable to answer the need the light float FIR in any exactly defined place and at the desired distance. In any case, the weight and dimensions of the FIR in case it is particularly light, are not obviously binding for the system.

As a matter of fact, the system of the Floating Unit being the object of the present invention, still has all those special operational features that will be described below even with FIRs of larger dimensions and of heavier weight compared with the specific contrivance described herein.

Here again with the FIR/SS or FIR/FS units fully integrated during the phase of penetrating into the water, the state of such units FIR/SS or FIR/FS which had been maintained during the casting phase, is modified due to an essential technical factor. Such technical factor is the effect on the contrivance provided by the liquid medium, i.e. water. Hence, an important feature characterizing the present contrivance is the presence of water. The water in which the FIR/SS or FIR/FS units are submerged, penetrates into the same and filters (going up along the remaining space inside the tube hole of adequate diameter which makes part of the weighty component part SS or FS, housing the lighter part FIR), between the wall of the tube of the SS or the FS and the wall of the FIR itself.

The experiments carried out on a unit having a tube hole of wrong diameter (which tube is integrated in the weighty part SS or FS), and in which tube the float FIR is housed, demonstrated what follows with the empirical data following faithfully and exactly the theoretical data.

With a too large diameter X compared with the diameter of the float FIR, the water-cushion between the inside wall of the hole of the weighty component part SS or FS and the FIR was losing tension at the surface and formed a "concavity" on the free surface of the water inside the hole itself. This concavity on the surface of the water medium indicates, from a physical viewpoint, that the forces exerted by the water molecules inside the hole are distributed as centrifugal vectorial forces in the direction of the wall of the hole itself and, as a result, they lose the property consisting in converging towards the internal body, i.e. towards the float FIR, thus nullifying the attempt at creating a liquid "cushion" carrying the body of the same FIR. When such loss of tension by the water medium occurred, the float bent lengthwise along the loop hole, thus losing the vertical balance position and the very good properties exhibited in terms of stability and movement sensitivity. With a smaller diameter Y compared with the diameter of the float FIR, the water-cushion between the inside wall of the hole of the weighty component part SS or FS and the surface of the body of the FIR, was actually disappearing and, by exerting its typical piston-like movement on the float FIR, the release was observed of several air bubbles from the small residual space between the wall of the hole and the wall of the float FIR. The piston-like movement of the float had to be continuously exerted by force as it did not show the properties of flexibility necessary and sufficient for significant sliding. While managing to eject all the air still enclosed inside the nearly capillary space between the wall of the hole and the wall of the float, the FIR did not recover such features as are shown by a totally free body agile in movement. It was therefore possible to empirically find out what had been confirmed by the theoretical data: in case of a very small space, the water medium is hindered, while going upwards by capillarity along the residual hollow between the wall of the hole and the wall of the FIR, by the air present inside the same hollow; even when it succeeds in totally replacing the gas medium, the vectorial forces of the water molecules act at the same time in two equal, opposite directions, i.e. from the inside to the outside and from the outside to the inside, thus emphasizing instead of decreasing the friction exerted by the system, contrary to what could be wrongly thought.

With a diameter Z of proper dimensions compared with the diameter of the float FIR, the water-cushion between the inside wall of the hole of the weighty component part SS or FS and the surface of the body of the FIR, was acquiring tension on the surface, and was creating a "convexity" on the free surface of the water, inside the same hole. Such convexity on the surface of the water medium indicates, from a physical viewpoint, that the forces exerted by the water molecules inside the hole are distributed as centripetal vectorial forces, thus acquiring the feature consisting in converging towards the internal body, i.e. towards the float FIR, which confirmed our well-grounded intention to create a fluid "cushion" carrying the internal body itself. When this water medium acquired such tension, the float was floating upright in perfect balance, and showed utmost stability and piston-like perfectly sensitive friction-free movement.

**The contribution by this essential technical factor helps reach the goal which fostered the present invention:** to have a float FIR of any dimension or weight (obviously within the standards provided for by the present invention) in any exactly defined place and at the desired distance; to ensure its perfect stability in resting conditions and in the dynamic state of response to the bite, due to the fact that it is protected by the SS or the FS acting as a screen against the attacks by contingent events (such as, in particular, those resulting from adverse weather conditions (wind, rippling of the water surface, wave motion)); to ensure its utmost sensitivity, due to the fact that it is supported and protected by the water-cushion insulating it against interferences with the SS or the FS, which means that it should be totally free to move inside the same with the utmost accuracy and without any type of friction and free of any interference with the weighty part containing and surrounding it.

**FIR is referred to as the floating element which supports and is one with the fishing unit (line yarn, hook and bait) and which also acts as an indicator rod for the impulses sent by the catch taking the bait.**

**SS is referred to as a heavy body which is kept floating, in any way, having any shape or being made of any material, and which can be forced to sink by the lightest possible additional weight in grams making it exceed the critical floating point under the free surface of the water. FS is referred to as a heavy body which is kept floating in any way, having any shape or being made of any material and which can stably float on the free surface of the water despite its weight**.

There are two versions of the FIR which only differ the one from the other by the way the line is attached to the same and certainly not by their inherent operation which is the same for both of them: the version that could be defined as **Conventional FIR** (**CFIR**), because this contrivance is meant to obviate the defects shown by Conventional Floats, and the version that could be defined as **English-style FIR** (**EFIR**), because this contrivance is meant to obviate the defects shown by Lead-shotted Floats which are commonly called "English-style" floats.

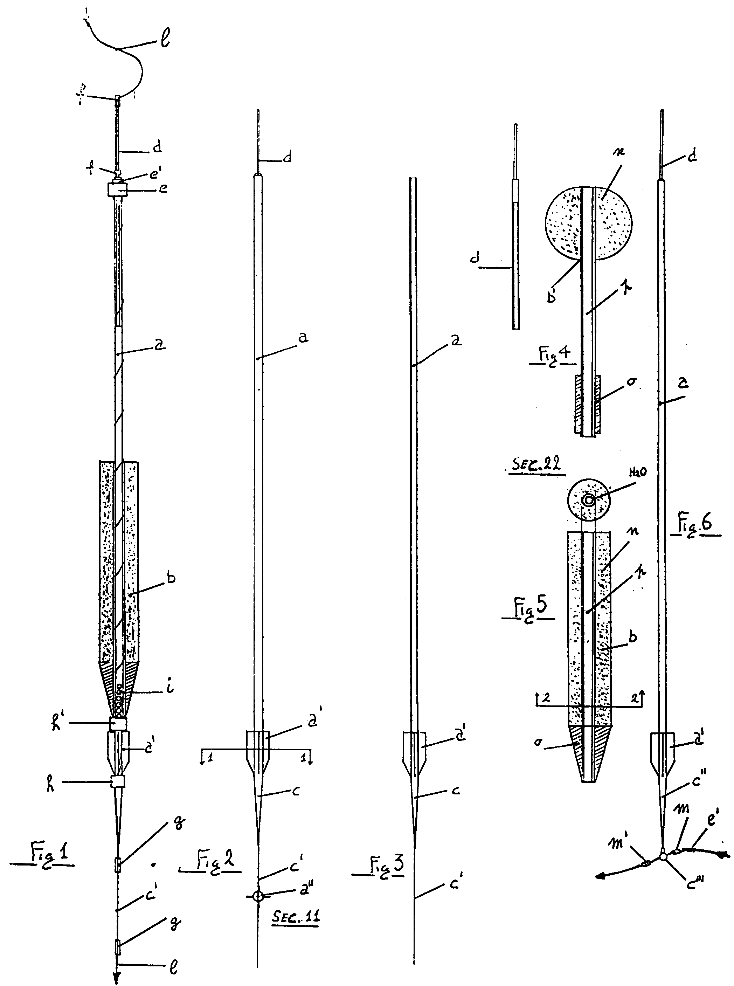

The **CFIR** (TAB.I/fig.2) basically stands out for being made up of a light, strong tube preferably made of plastic or nylon or of any other material provided that it exhibits the required features in terms of lightness and strength, it should be very thin and perfectly smooth and ending with a bullet-like tip, and fitted with a steel end rod which serves to firmly and totally unite the line yarn to the same float, with the line being consequently attached up to the top of the CFIR's head and, as a result, with the outside line floating on the free surface of the water. On the side of its head, it features a terminal made of carbon fibre which is firmly united to a rigid plastic small tube. This terminal is a body detached from the tube, i.e. the body of the CFIR, and slides inside the tube itself for a short travel. This moving terminal placed on the head of the CFIR is aimed at allowing a possible weight to be inserted inside the FIR. Therefore, the contrivance allows the fisherman to shot, on his own, the Fishing Unit and the relative Floating Unit as he wishes, acting on two different positions; the line yarn of the fishing unit (hook) can be lead-shotted only by means of those lead shots which are considered to be strictly necessary for the form of fishing performed on that occasion, and it is possible to lead-shot the CFIR, i.e. the operating and functional part of the fishing event, inside the FIR tube, thus providing the overall desired shotting without having to add any foreign body outside which would increase the general friction exerted by the system. It should be pointed out that, as was described above, the CFIR can be lead-shotted or not; the choice to shot it or not is an additional option for the fisherman when he chooses the style of fishing he likes to do and when he establishes the shotting level of the part of the CFIR emerging from the free surface of the water. In short, he can select the shotting that he considers as the most suitable for that style of fishing, and, irrespective of this, he can choose the right amount of float sinking or showing, for such visibility and sensitivity as he may think fit.

By way of example I will consider fishing for Salmonids. With a "dead" bait, the CFIR can be calibrated approximately to zero grams on the line, actually using only the weight of the bait itself, whereas, inside the tube, in case the CFIR has a capacity of 0.80 grams, approx. 0.60 grams of shots will be used for shotting (later on I will explain the reason why shotting should be lower than the rated capacity of the float). Such shotting allows the bait to billow as naturally as possible due to the absence of any weight on the line yarn of the fishing unit, and the friction exerted by the system has not been changed in any way, while leaving such shotting level of the float unchanged as was chosen and selected. If the float is calibrated by putting inside the tube shots of a weight higher or lower than 0.60 grams as mentioned above, the level of the part of the float emerging from the free surface of the water will be lower or higher, hence less or more visible and, as a result, showing less or more resistance to penetrating into the water as a response to the bite (here again in very limited terms of absolute value); it will be the fisherman who will choose the situation which is more convenient to him. When fishing with a "live" bait, in order to prevent the bait-little fish from moving the fishing unit from the determined position and depth, for instance 0.30 gram lead-shots are attached to the line yarn, which are sufficient to stop the movement of the "live" bait, and out of the remaining 0.50 grams (the rated capacity of the float is here again 0.80 grams), approx. 0.30 grams will be inserted inside the tube of the CFIR (or of the EFIR) (for this lower shotting too, the reader should refer to the explanations that will be given about the shotting of the CFIR and of the EFIR); but here again, although 0.30 grams of lead shots have been attached to the line, the fisherman can modify the sensitivity and visibility of the unit without affecting, if not only slightly, the resistance of the unit itself and, here again without changing if not slightly its response sensitivity. It can be easily guessed that the contrivance makes it possible to reduce, to such minimum level as is thought to be indispensable, the additional bodies along the fishing unit downstream relative to the floating unit, which are necessary for such style of fishing, so as to have, as a consequence, as low friction exerted by the whole unit as possible.

If a conventional float is used, replacing a light weight float for fishing with a "dead" bait, with a heavier float for fishing with a "live" bait, is the only way to keep the bait-small fish suitably suspended while preventing the same from moving the floating unit; hence, in comparison with the previous example describing the shotting of the CFIR (or of the EFIR), a conventional 0.80 gram float would need 0.80 gram shotting on the line yarn to stably float upright; a conventional 0.80 gram float is a float of considerable dimensions and therefore the overall surface which is opposed to penetration has a much greater impact compared with the lightest float required for fishing with a "dead" bait; therefore, the resulting system would feature values of friction having a much greater impact on the system resistance to a taking fish. As a consequence, the catch would be most likely to leave the bait, since the excessive resistance of the system negatively affects the natural behaviour that the bait should have vis-à-vis the bite.

The **EFIR** (TAB.I/fig.6) basically stands out for being made up of a light, strong tube preferably made of plastic or nylon or of any other material provided that it exhibits the required features in terms of lightness and strength, it should be very thin and perfectly smooth and ending with a truncated bullet-like tip aimed at housing the end pulley in order to partially unite the line yarn to the float itself and with the line being consequently attached to the pulley and, therefore, with the line sinking under the free surface of the water to a depth equal to the sinking part of the EFIR. On its top, it features a terminal made of carbon fibre which is firmly united to a rigid plastic small tube.

This terminal is a body detached from the tube, i.e. the body of the EFIR, and slides inside the tube itself for a short travel. This moving terminal placed on the head of the EFIR is aimed at allowing a weight, if any, to be inserted inside the floating rod. Therefore, the contrivance allows the fisherman to shot, on his own, the Fishing Unit and the relative Floating Unit as he wishes, acting on two different positions; the line yarn of the fishing unit (hook) can be lead-shotted only using those lead shots which are considered to be strictly necessary for the specific form of fishing performed on that occasion, and it is possible to shot the EFIR, i.e. the operating and functional part of the fishing event inside the FIR tube, thus providing the overall desired shotting without having to add any foreign body outside which would increase the general friction exerted by the system. It should be pointed out that, as was described above, the EFIR can be shotted or not; the choice to shot it or not is an additional option for the fisherman when he chooses the style of fishing he likes to do and when he establishes the shotting level of the part of the EFIR emerging from the free surface of the water. In short, he can select the shotting that he considers as the most suitable for that style of fishing, and, irrespective of this, he can choose the right amount of float sinking or showing, for such visibility and sensitivity as he may think fit.

From the point of view of structure, both for the CFIR and the EFIR, before the tube becomes thinner to end with the tip, four fins, also making part of the tube itself, are projected outside thus making the tip appear to be like a dart. This dart-shaped unit corresponds to a mechanical stopper. This stopper is aimed at stopping the SS in its fishing stationary position and at stopping both the SS and the FS should they tend to come out of the CFIR or the EFIR, during the casting phase or retrieve of the line, and due to the dynamic movement that this weighty component part of the system is subject to. Before describing the weighty part of the contrivance, i.e. the SS or the FS, I would like to give the explanations the reader was referred to when describing the shotting of the CFIR (which applies to the EFIR as well), as far as fishing for salmonids is concerned. On that occasion I emphasized a seeming contradiction where I stated that it was convenient not to reach the rated shotting of the float. Since the CFIR and the EFIR are floats made up of a hollow air-tight tube, the air contained inside such tube considerably helps the float which has sunken as a response to the bite, and namely it helps the float re-emerge rapidly and resume the static state as quickly as possible. This quick return which constantly occurs with the present contrivance, especially due to the already mentioned "drifting" function performed by the FIR itself, is all-important because, while resuming the static position it prevents the catch from taking the bait again with the fisherman not realizing it. The reader should refer to the description of the defects of Lead-shotted Floats (LF or English float) which are currently available on the market, where I stated that the main defect was the multiple redundancy of movements following a bite due to the true unchaining of potential energy contained inside the LF when turning from the static position to the motion position, because of the event of a "fish taking the bite". Well, in the present contrivance where shotting is made by fractions of a gram and not by grams, decreasing the rated weight in grams of the CFIR or the EFIR to a lower true weight in grams "inside the tube", means being able to "lift some shots" from the float, thus making it lighter and free so that it can be quickly ready for a sensitive response. As a matter of fact, should our float be withdrawn from the weighty component part of the CFIR/SS or FS or EFIR/SS or FS, with the shotting recommended for the present contrivance, and should it be put into the water again alone, it would lie down horizontally thus floating freely above the free surface of the water, without managing, in any way, to resume its previous upright floating position due to the fact that it is not supported by the SS or FS. However, since the CFIR and the EFIR are carried inside a load bearing body, i.e. the SS or the FS (which will be described below), they freely slide inside such load bearing body, floating upright, which position is maintained by the same. The lift of shots in respect of the rated capacity (which, if the actual equivalent shotting reached such capacity, would provide them with such balance as is necessary to autonomously keep floating upright), makes them more sensitive while floating and, as a consequence, their movements are considerably emphasized when they rapidly appear and disappear, said movements are the core of the act of indicating the bite during fishing.

The **Sinking Sinker** (**SS**) mentioned above stands out for being able to sink as soon as the critical floating level on the free surface of the water has been exceeded, and to lean against the four dart-shaped fins making the tip of the FIR. While leaning against the fins themselves, the SS modifies the sinking of the FIR by only one calibration notch and has been developed in such a way as to provide wide safety margins in case of a heavier incumbent weight.

The **Floating Sinker** **(FS)** mentioned above stands out for being able to stably float on the free surface of the water without leaning against or interfering, in any way, with the FIR.

Both sinkers SS and FS are heavy bodies supported by a floating structure of any dimensions, shape or material, provided that show the features by which the two sinkers differ:
light sinking of the SS and stable floating of the FS.

From the point of view of their structure the two sinkers SS and FS are identical (as a matter of fact only shotting varies). The floating substance or the system allowing the sinker to float is concentrated on the upper part, whereas the heavy substance is concentrated on the lower part. The two substances, a floating one and a heavy one, are assembled around a light, strong tube preferably made of plastic or nylon, aimed at housing the FIR and which consequently features suitable dimensions both in length and in inside diameter. As a matter of fact, the SS and the FS are meant to be the weighty component parts of the FIR/SS or FS units. Once the FIR is housed inside the tube, it is kept here as a sliding, independent body. It should be pointed out that the free sliding friction between the FIR and the SS or FS is to be considered as nearly inexistent due to the presence of water which, as previously stated with reference to the impact of the Floating Unit FIR/SS or FS with the water surface, penetrates into the unit itself, and, being present between the two bodies (the carrier body and the carried body), acts as a cushion carrying the same FIR. In addition, due to the length of the line yarn between the Floating Unit FIR/SS or FS and the fishing unit (line yarn, hook, bait), the movement of the fishing unit because of a bite actually turns - which is also confirmed by the theoretical force vectors - into a force which is mostly exerted vertically, thus allowing less inside friction between the FIR and the walls of the inside tube the SS or the FS are fitted with. Only with a greedy and firm bite, this special feature characterizing such a sudden event would tend to nullify the vertical indication provided by the FIR to the benefit of a joint movement of the same with the SS, or the FS; on this occasion, however, for the inherent nature of that event, there automatically occurs a "self-strike" by the catch, with the fisherman catching the same, who will not be faced with any difficulty other than driving the catch home. As to the function they perform, the SS acts in a totally different way compared with the FS. Nevertheless, their function is determined by the fisherman himself who has, in this way, a further chance to act, in addition to what has been previously described, thus customizing the operation of the Floating Unit.

The SS exhibits the following features: it allows a long excursion on the part of the FIR before it reaches its stopper, i.e. the SS and, as a result, before the friction exerted by the much larger overall surface of the SS is added to the inherent friction exerted by the overall surface of the FIR itself. The SS resumes its leaning position against the FIR in an extremely flexible way and with some delay compared with the immediate sinking reaction of the same, and this feature directly depends on the particular sinking weight of the sinker concerned; however, what is more important, the rebound that the FIR undergoes when the SS leans against the FIR itself, affects the fishing unit by making it sink and, therefore, it is not in contrast with the possible stay of the bait in the mouth of the catch: this means that this rebound does not affect the features consisting in the natural resistance shown by the bait and, as a result, it can hardly make the catch give up by getting it to refuse the bait itself because it appears to be "suspect". Even though it allows the fisherman to immediately see the bite in all styles of fishing both in midwater and at the bottom, the SS does not allow the fisherman, to see a particular bite during the widespread fishing for Cyprinids, only in one style of fishing in midwater: the so-called "lifting" in the case of a "rising" bite. It is the FS which performs this special function, in addition to all the other functions which are also carried out by the SS. As a matter of fact, the SS and the FS differ in performing an essential function:
the excursion of the FIR sliding inside them. In fact, with reference to the above definition of the SS and the FS: the SS is a floating sinker which sinks due to an infinitesimal weight in grams which removes it from the state of balance necessary to stably float, and, while sinking, it leans against the dart-shaped terminal of the FIR: the FS is a sinker which stably floats on the free surface of the water without interfering, in no way, with the FIR. The difference in location of the two sinkers SS and FS relative to the FIR, having a direct influence on the indicator behaviour by the same FIR, is the following. The SS, being a sinking sinker, is leaning against the fins of the dart-shaped tip the FIR is fitted with, and is located at a X distance from the free surface of the water and at the opposite end of its top, and, hence, between the terminal of the Floating Indicator Rod and the SS, all its length is used before the stop placed on the terminal of the FIR starts dragging the SS as well, due to a very deep bite. Hence, the utmost advantage can be taken from the location of the SS if the fisherman wishes to shot the FIR providing the maximum shotting weight which corresponds to the rated capacity of the Floating Indicator Rod. As a matter of fact, it is true that, with the maximum shooting weight being provided, there would be the minimum possible emerging by the Floating Indicator Rod, and thus the lowest degree of visibility of the same Rod would be provided to the fisherman, but this would ensure the lowest friction of the same Rod to penetrating into the water, should a bite occur. Should such fisherman use the FS, the Indicator Rod would run the shortest possible travel and, here again, in case a bite occurs, the impact of the stop on the terminal of the FIR with the FS itself, would occur immediately, thus increasing the friction when the FIR is firmly united to the FS (or the SS), whereto reference has already been made.

However, the SS leaning against the dart-shaped terminal of the FIR allows the same to perform only one movement: sinking.

The FS which stably floats in a natural way on the free surface of the water, is located at a X distance from the sunken terminal of the FIR, which can, therefore, provided that it has been suitably shotted, (here again with a shooting lower than the rated capacity of the float itself, so as to increase its response sensitivity), slide inside the FS to the sinking direction and to the opposite one, i.e. to the rising direction. It is in this last action that the raison d'être of the FIR mounted on the FS in this special style of fishing for the Cyprinids, is to be found. As a matter of fact, the Cyprinids often eat the food by seizing it with their mouth and without moving any further lengthwise they rise vertically, thus moving the bait only vertically. Hence, should the fisherman choose to go fishing for the Cyprinids when they do not eat on the bottom but in midwater due to certain environmental conditions or otherwise, he would be better to equip the line with the FS because, when suitably shotted, the FIR + FS unit will allow him to clearly and accurately see the "rising" of the indicator as an additional option to the indication provided by ordinary "sinking", and, therefore, to catch the fish even in this special, delicate and scarcely sensitive way of taking the bait by this species of fish. Finally, when the FS is used on the FIR for some special styles of fishing which do not require any shotting, a silicone ring can be positioned on the float, which is designed to stop the FS at a desired level of the float higher than the FIR's normal shotting level not resulting from additional shotting.

By positioning this ring along the FIR, using the act of stopping as carried out by the FS, the FIR itself is lowered mechanically compared with its shotting level. In this way, it is possible to "lift some of its shots", thus making it more sensitive during dynamic response, without providing any differentiated shotting.

Before describing a simple way of executing the contrivance by way of example and as a mere indication of and not restricting the scope of the present patent, some statements are to be made hereto relative to the previous, possible existence of floats which can somehow show the same features as the present invention.

The Floating Indicator Rod (FIR) can be, when it is taken individually and when it is lead-shotted inside the tube, considered to be similar to the family of existing Lead-shotted Floats (or English floats), described above. Its essential feature as a float which, if it is lead-shotted it is lead-shotted with some "lift of shots" being provided, is in contrast with the main feature of conventional lead-shotted floats which, instead, are always "shotted" and in stable equilibrium, and such essential feature makes it totally differ from the same floats; it also differs from the same because it can resist being firmly united to the line yarn, all along its body, without changing either its artificial upright position obtained by inserting the same into the carrier body SS or FS or, here again due to the presence of the support, the shotting level which it could be submitted to due to various concomitant events (waves, wind) affecting the line itself, thus impairing its main function as a sensitive bite indicator. The practice of shotting by providing the FIR with lead shots inside the float itself, which do not consequently affect its operation, thus customizing, in addition, all forms of fishing offered to the fisherman for sport, highlights the features of the invention of the contrivance even more.

Nevertheless, the most important thing making the present float stand out is that the all shots can be lifted, so that it may also be a non-shotted float.

The Sinking Sinker (SS) and the Floating Sinker (FS), considered individually, do not have any existing manufactures which can somehow be similar and not even vaguely comparable to the same as far as their operation is concerned.

The "FISHING FLOAT WITH SLIDING, INDEPENDENT INDICATOR ROD", i.e. the FLOATING INDICATOR ROD + SINKING SINKER or + FLOATING SINKER unit, in its inherent way of being a UNIT MADE UP OF TWO FULLY INTEGRATED ELEMENTS DURING THE CASTING PHASE, BUT SLIDING ONE INSIDE THE OTHER AND BEING INDEPENDENT DURING THE FISHING PHASE, does not have any float or existing device which can somehow be compared to its own, specific and characteristic operation.

By way of mere indication and not restricting the scope of the present patent, a description is given hereto of a simple way, among all possible ways, of executing the contrivance with reference to the drawings herewith enclosed where TAB.I fig.1 shows the contrivance in its vertical section and as completely mounted and ready for use; fig.2 shows the Floating Indicator Rod (FIR) with a steel tip and to be used as a Conventional float (CFIR), fig.3 shows the Floating Indicator Rod (FIR) broken down into its two component parts: a "tube with bullet-like terminal with steel tip" and a "rising up carbon terminal", figs. 4-5 show the Weighty Component part of the Floating Unit which may be the Floating Sinker (FS) and the Sinking Sinker (SS), differing by shotting, in two possible versions which only differ by the shape but which are identical as to their structure, fig.6 shows the Floating Indicator Rod (FIR) with the tip ending with a pulley and to be used as an English-style float (EFIR). With reference to the above pictures;...a) indicates the tube made of plastic or nylon or any other suitable material, and which is thin but strong and perfectly smooth, and which makes the body of the FIR and can have different diameters ranging from minimum to maximum diameters;...a') indicates the detail of the four dart-shaped fins making part of the tube and being the lower support, on the FIR, of the SS during the fishing state and the lower stop on the FIR itself stopping the SS and the FS when coming out during the casting phase and retrieve of the line;... 1-1) shows the horizontal section of the detail a';... b) and b') show two ways of executing, solely with regard to design, the weighty component part of the floating unit whether it is Sinking (SS) or Floating (FS);... c) indicates the terminal of the bullet-shaped tube with steel rod c') for firmly and totally uniting the line yarn l) to the tube, with the line being attached to the top of the CFIR's head on terminal d) and therefore with the outside line floating on the free surface of the water;... c' indicates the steel rod of terminal c);... c'') indicates the terminal of the bullet-shaped tube with pulley c‴);... c‴) indicates the pulley of terminal c'') for the passing line yarn (l') which is not firmly and totally united to the float itself, with the line being consequently attached to the pulley and, therefore, with the line sunken under the free surface of the water at a depth equal to the sinking part of the EFIR;... d) indicates the terminal made up of a rising plastic tube made of carbon fibre suitable for being glued inside the tube (a) in order to seal weight-setting lead shots i);... e) indicates a very thick silicon ring stopping the sliding of the SS or the FS, thus preventing the sinker from coming out of the FIR during the casting phase and retrieve of the line, it also acts as a stopper during the act of sinking by the FIR while sinking as a response to the bite of a taking fish; ... e') indicates a highly adhering silicon ring which helps the small ring e) resist the strain that such small ring could be submitted to due to the push by the SS or the FS;... f) indicates two identical small silicon rings firmly uniting the rising line yarn to the spur of d) on the CFIR and on the EFIR;... g) two identical silicon small rings firmly uniting the line yarn to the steel tip c') on the EFIR;... h) indicates a small ring stopping the line yarn downstream relative to the four fins making the dart a') on the CFIR;... H') indicates a small ring designed to stop the float FS on the CFIR and on the EFIR in any position;... i) the weight-setting lead shots inserted on spot before glueing terminal d) to the tube a);... l) indicates the line yarn which runs along the CFIR and is stopped in sequence by the identical silicon small rings f), followed by a silicon ring e') followed by a thicker small silicon ring e), and then, after being wound several times around the central body of the FIR so as to stiffen the flexibility of the tube with the line, the same line is stopped by the small silicon ring h) << As a matter of fact, the tube is naturally very flexible and very long to meet operational needs and if the line yarn were not wound and, instead, should it simply run along the FIR, that line would be submitted to such strain as is due to the powerful pulls by the caught fish. After the stretching phase undergone by the line yarn itself following the strong traction, such line yarn resumes the resting state thus restoring its original length, as a result of what has been described above and because of the friction with the stopping rings e) and h), and in the absence of sliding to the opposite direction, the tube could bend and prevent, if not totally obstruct, due to its bending, the perfect sliding on the part of the SS and the FS along the FIR.>>, followed by two identical small silicon rings g);... l') indicates the line yarn passing through the pulley c‴) with two stoppers m) and m');... m) indicates a stopper upstream relative to the pulley c‴) for stopping the line in the event that an EFIR is used sliding along the line itself;... m') indicates a stopper downstream relative to the pulley c‴) for stopping with the aid of the stopper m), the EFIR in any determined and fixed point of the line;... n) indicates the floating material of the Sinking Sinker (SS) or of the Floating Sinker (FS) alike;... o) indicates the heavy material of the SS or of the FS, which is to be equal in weight to the floating mass b) or b') in the case of the FS since the FS should stably float on the free surface of the water, and slightly heavier than the weight equivalent of the floating mass b) or b') in the case of the SS, since the SS should slightly sink until it stops against the dart of the tip a') during the act of fishing, without significantly modifying the shotting of the FIR;... p) indicates the strong and perfectly smooth tube made of plastic or nylon around which there is the floating material n) and the heavy material o), which, although they can have various locations to meet operational needs as required by the positioning of the floating unit, are conceptually arranged the one opposite to the other; such tube houses, supports, guides and holds the FIR. Within certain limits, the tube can support various FIRs for homogeneous groups of diameters, lengths and capacities. It can be stated that the described float meets a further need of the fisherman for sport: that is the need for interchangeability of the float FIR inside the SS, or inside the FS, within the framework of the homogeneous groups selected on such occasion and for that special style of fishing. As a matter of fact, thanks to how the mounting procedure of the contrivance as described until now has been developed, dismounting is quick and easy; in the case of the CFIR with steel end rod for firmly and totally uniting the line yarn to the float, the following will be arranged on the line, in sequential order, from the top to the bottom: the two identical small rings f), the ring e'), the ring e), the SS and the FS b) or b'), and, in the event it should be used, the small ring h'), the ring h), the two identical small rings g). As a separate and detached body there will be the CFIR. In a very short time, and obviously provided that it is included in a homogeneous group consistently with the SS or the FS mounted on the line, the CFIR will he positioned inside the system by performing very simple collateral movements. For the EFIR, the float only needs to be changed provided that it is mounted on the line with a spring catch being interposed.

In actual practice, execution details, dimensions, materials, shape and otherwise of the contrivance may be changed within the scope of the present industrial patent. As a matter of fact, the so developed contrivance is subject to several changes and modifications, all of which fall within the scope of the concept under the present invention. In addition, all elements can be replaced by other technically equivalent elements.

Under the previous claim:
**FLOATING INDICATOR ROD AND SINKING SINKER OR FLOATING SINKER UNIT**.
**CHARACTERISTIC** and totally new, consistently with the contrivance being the object of the present invention.
**CHARACTERIZED** by the fact that it is a unit made of two separate and detached bodies (FIR and SS or FS).
**CHARACTERIZED** by the fact that such unit is firmly united during the casting phase, and the two bodies interfere the one with the other.
**CHARACTERIZED** by the fact that, while fishing, such unit is made up of two bodies not interfering the one with the other.
**CHARACTERIZED** by the fact that the water penetrates into such unit, thus forming a sliding cushion for the floating body CFIR and EFIR and acting as a spacer between the CFIR or the EFIR and the SS or the FS (2-2).
**CHARACTERIZED** by the fact that the FIR is protected by the water cushion so as not to interfere with the SS or the FS; is protected by the carrier body SS or FS against disturbing agents outside the Unit and is made stable by the concurrent action of these factors and by the long lead-shotted fin which is its spur under the free surface of the water.

## Claims

**1st) "FISHING FLOAT WITH SLIDING, INDEPENDENT INDICATOR ROD"**.
**COMPRISING** a Floating Indicator Rod (FIR-fig.3) in two versions, a conventional float (CFIR-fig.2), a so-called English-style float (EFIR-fig.6).
**CHARACTERIZED** by a Sinker in two versions SS and FS (figs.4-5).
**CHARACTERIZED** by the fact that the two component parts the FLOATING INDICATOR ROD (fig.3) and the SINKING SINKER or the FLOATING SINKER (figs.4-5) make one single unit which is the contrivance being the object of the present invention, i.e. the "Fishing Float With Sliding, Independent Indicator Rod".

**2nd) "FISHING FLOAT WITH SLIDING, INDEPENDENT INDICATOR ROD"**.
Under the previous claim:
**FLOATING INDICATOR ROD** (FIR-fig.3) for a style of fishing similar to that practiced with a **CONVENTIONAL** float **(CFIR-fig.2).**
**COMPRISING** a tube made of plastic or similar materials, with a bullet-shaped terminal and a steel rod and a set of small silicon rings for firmly uniting the line yarn to the float.
**CHARACTERIZED** by the fact that the rising carbon terminal (d) allows the lead shots (i) to be inserted into the tube (a) and hermetic seal by glueing (d) to (a).
**CHARACTERIZED** by the fact that it features Four fins (a'), or otherwise whatever can perform such function, placed in a dart-like position nearly at the end of the floating body CFIR (fig.2) as the lower stop of the SS or the FS (figs.4-5) during the casting phase and retrieve until the two sinkers come out of the system.
**CHARACTERIZED** by the fact that the dart-like stopper (a') placed on the float top is the stop of the SS during the fishing phase.
**CHARACTERIZED** by the fact that it features a small and thick silicon ring (h') between the dart-shaped terminal and the FS, as a stop of the FS so as to "lift more shots" and, as a result, the indication sensitivity of the CFIR (fig.2) in the absence of shotting.
**CHARACTERIZED** by the fact that it features a small silicon ring of suitable thickness (e) placed near the head of the CFIR (fig.2), as the upper stop of the SS and the FS so as to prevent them from coming out of the system when casting or during the retrieve and as a useful stop preventing the SS and the FS from coming out of their housing while the float is sinking in case of a taking fish.
**CHARACTERIZED** by the fact that it features a small silicon ring placed upstream relative to the small ring stopping the sinkers SS and FS (e'), which has been inserted on purpose and which is meant to help the previously described small ring (e) perform the act of stopping the SS and the FS.
**CHARACTERIZED** by the fact that the line yarn (l) is firmly united to the whole floating body from the steel tip (c') up to the rising part made of carbon of the head (d), thus making the line completely show over the surface in a position above the free surface of the water and preventing the so-called "bridge effect".
**CHARACTERIZED** by the fact that the line yarn (l) can be stopped at the shotting level, that is on the free surface of the water that is under the shotting level and, as a result, submerged under the free surface of the water by moving the small rings (e-e') to the selected position.
**CHARACTERIZED** by the fact that the line yarn is firmly united to the CFIR along the long side of the same, by being wound several times around the tube (a), and stopped by means of the small rings (h) and (e) which do not allow it to be unwound to the inverted direction, so as to stiffen the flexibility of the tube (a) and to prevent the tension of the line yarn (l), which, when firmly united to the CFIR, is submitted to a strong traction, from causing the CFIR itself to bend (fig.2) while returning to the resting state, thus stopping the sliding on the part of the SS and the FS.
**CHARACTERIZED** by the fact that the shotting of the floating body is made by means of lead shots (i) of suitable weight, placed inside the tube (a), and prevented from coming out, downstream, of the terminal which is closed by a steel tip (c), upstream by glueing the rising plastic tube made of carbon (d) inside the tube (a), i.e. the FIR (fig.3).
**CHARACTERIZED** by the fact that it can work perfectly with no need to be lead-shotted.
**CHARACTERIZED** by the fact that it is the only floating body FIR (fig.3) of the Floating Unit FIR/SS or FS (fig.1), which is firmly united to the line (l).
**CHARACTERIZED** by the fact that when it moves due to the strain caused by a bite, it is the only moving component part of the floating unit FIR/SS or FS (fig.1).
**CHARACTERIZED** by the fact that it is placed inside a carrier body SS or FS (fig.1).
**CHARACTERIZED** by the fact that it is surrounded and supported by the presence of water creating a sliding cushion around the FIR (2-2).
**CHARACTERIZED** by the fact that the sliding movement inside the carrier body SS or FS, is in both directions, i.e. to the sinking direction and to the rising direction.

**3rd) "FISHING FLOAT WITH SLIDING, INDEPENDENT INDICATOR ROD"**.
Under the previous claim:
**FLOATING INDICATOR ROD** (FIR-fig.3) for a style of fishing similar to that done with a so-called **ENGLISH-STYLE** float **(EFIR-fig.6).**
**COMPRISING** a tube made of plastic or similar materials, with a bullet-shaped terminal and a pulley.
**CHARACTERIZED** by the fact that the rising terminal made of carbon (d) allows the lead shots (i) to be inserted into the tube (a) and hermetic seal by glueing (d) to (a).
**CHARACTERIZED** by the fact that it features Four fins (a'), or otherwise whatever can perform such function, placed in a dart-like position nearly at the end of the floating body EFIR (fig.6) as the lower stop of the SS or the FS (figs.4-5) during the casting phase and retrieve until the two sinkers come out of the system.
**CHARACTERIZED** by the fact that the dart-like stopper (a') placed on the float top is the stop of the SS during the fishing phase.
**CHARACTERIZED** by the fact that it features a small and thick silicon ring (h') between the dart-shaped terminal and the FS, as a stop of the FS so as to "lift more shots" and, as a result, the indication sensitivity of the EFIR (fig.6) in the absence of shotting.
**CHARACTERIZED** by the fact that it features a small silicon ring of suitable thickness (e) placed near the head of the EFIR (fig.6), as the upper stop of the SS and the FS so as to prevent them from coming out of the system when casting or during the retrieve and as a useful stop preventing the SS and the FS from coming out of their housing while the float is sinking in case of a taking fish.
**CHARACTERIZED** by the fact that it features a small silicon ring placed upstream relative to the small ring stopping the sinkers SS and FS (e') which has been inserted on purpose and which is meant to help the previously described small ring (e) perform the act of stopping the SS and the FS.
**CHARACTERIZED** by the fact that the shotting of the floating body is made by means of lead shots (i) of suitable weight, placed inside the tube (a), and prevented from coming out downstream of the terminal which is closed by a pulley (c‴), upstream by glueing the rising plastic tube made of carbon (d) inside the tube (a), i.e. the FIR (fig.3).
**CHARACTERIZED** by the fact that it can work perfectly with no need to be lead-shotted.
**CHARACTERIZED** by the fact that it is the only floating body FIR (fig.3) of the Floating Unit FIR/SS or FS, which is firmly united to the line (l').
**CHARACTERIZED** by the fact that when it moves due to the strain caused by a bite, it is the only moving component part of the Floating Unit EFIR/SS or FS (fig.1).
**CHARACTERIZED** by the fact that it is placed inside a carrier body SS or FS.
**CHARACTERIZED** by the fact that it is surrounded and supported by the presence of water (c'''') creating a sliding cushion around the FIR (c'''').
**CHARACTERIZED** by the fact that the sliding movement inside the carrier body SS or FS, is in both directions, i.e. to the sinking direction and to the rising direction.

**4th) "FISHING FLOAT WITH SLIDING, INDEPENDENT INDICATOR ROD"**.
Under the previous claim:
**SINKING SINKER (SS)**.
**CHARACTERISTIC** and totally new.
**CHARACTERIZED** by the fact that it is a heavy mass (o) held afloat by a suitable, equivalent floating mass (n). Due to heavy, additional shotting the critical floating point is exceeded and the sinker slowly sinks and with very little spurious weight.
**CHARACTERIZED** by the fact that its fishing position is leaning against the dart-shaped stopper (a') of the floating indicator rod (FIR-fig.3).
**CHARACTERIZED** by the fact that, due to its being a sinking sinker, while fishing it is placed in the furthest point relative to the head of the CFIR (fig.2) and of the EFIR (fig.6).
**CHARACTERIZED** by the fact that it houses the CFIR (fig.2) or the EFIR (fig.6) passing through the tube (p) without having laterally any contact point with them due to the presence of a water ring separating it from the FIR (c'''').
**CHARACTERIZED** by the fact that it has many contact points with the CFIR and the EFIR during the casting phase.
**CHARACTERIZED** by the fact that it is never either in contact with or firmly united to the line (l-l') and, hence, the fishing unit.

**5th) "FISHING FLOAT WITH SLIDING, INDEPENDENT INDICATOR ROD".**
Under the previous claim:
**FLOATING SINKER (FS)**.
**CHARACTERISTIC** and totally new.
**CHARACTERIZED** by the fact that it is a heavy mass (o) held afloat by a suitable, equivalent floating mass (n). The overall mass is in stable floating equilibrium and is submerged on the free surface of the water.
**CHARACTERIZED** by the fact that its fishing position is under the free surface of the water.
**CHARACTERIZED** by the fact that it houses the CFIR (fig.2) or the EFIR (fig.6) passing through the tube (p) without having laterally any contact point with them due to the presence of a water ring separating it from the FIR (2-2).
**CHARACTERIZED** by the fact that, while fishing, it has no contact point, neither laterally nor on its lower part, with the CFIR (fig.2) and the EFIR (fig.6).
**CHARACTERIZED** by the fact that it has many contact points with the CFIR and the EFIR during the casting phase.
**CHARACTERIZED** by the fact it is never either in contact with or firmly united to the line (l-l') and, hence, the fishing unit.

**6th ) "FISHING FLOAT WITH SLIDING, INDEPENDENT INDICATOR ROD"**.
